# EUROPEAN PATENT APPLICATION

(11) **EP 4 552 981 A1**
(43) Date of publication of application: **14.05.2025**
(21) Application number: 23854733.5
(22) Date of filing: 05.07.2023
(51) Int. Cl.: B64F 5/10, B62B 3/00, B62B 3/10, B62B 5/00

(54) **DEVICE AND METHOD FOR ATTACHING AIRCRAFT ENGINE**

(30) Priority: 17.08.2022 JP 2022130079
(71) Applicant: Mitsubishi Heavy Industries, Ltd., Tokyo 100-8332 (JP)
(72) Inventor: FUJITA, Jun, Tokyo 100-8332 (JP); YAMAJO, Masayuki, Tokyo 100-8332 (JP)
(74) Representative: Cabinet Beau de Loménie
(86) International application number: PCT/JP2023/024869
(87) International publication number: WO 2024/038696

(57) **Abstract**

A device and a method for attaching an aircraft engine include a linear movement device that supports a support frame for supporting the aircraft engine along a horizontal direction to freely move along a movement direction orthogonal to a rotation center axis of the aircraft engine, and a first swinging device that supports the support frame to freely swing about a first center axis parallel with the rotation center axis.

## Description

### Field

The present invention relates to a device and a method for attaching an aircraft engine.

### Background

An aircraft includes left and right main planes disposed on a body, and engines are respectively mounted on lower parts of the left and right main planes 102. In the aircraft, for example, the engine is detached from the main plane at the time of maintenance of the engine. When the maintenance of the engine is finished, the engine is attached to the main plane. Maintenance work for the engine is performed at a maintenance site. At the maintenance site, for example, the engine is raised by an overhead crane, and the engine is moved to a lower side of the main plane. The engine is then fixed to a lower surface of the main plane in a state in which the engine is brought close to the lower surface of the main plane. Examples of such a conventional device for attaching the aircraft engine include a device disclosed in Patent Literature 1 described below, for example.

### Citation List

### Patent Literature

Patent Literature 1: Japanese Patent No. 6450076

### Summary

### Technical Problem

The main plane is extended from a side part of the body along a horizontal direction. Note that the main plane is extended from a body part while being inclined toward an upper side in a vertical direction with a predetermined inclination angle with respect to the horizontal direction. Thus, the lower surface of the main plane for fixing the engine is an inclined surface having the predetermined inclination angle with respect to the horizontal direction. The aircraft includes a part to be attached having a downward U-shape disposed on the lower surface of the main plane, and an attachment part disposed on an upper part of the engine is fitted into and fixed to the part to be attached. However, the part to be attached is fixed to the lower surface of the inclined main plane, so that there is the problem that the attachment part is difficult to be fitted into the part to be attached only by raising the engine with a crane, and attachment work for the engine is complicated and takes a long time.

The present disclosure aims at solving the problem described above, and an object thereof is to provide a device and a method for attaching an aircraft engine to improve workability in work of attaching/detaching the aircraft engine.

### Solution to Problem

In order to achieve the above object, a device for attaching an aircraft engine according to the present disclosure includes: a linear movement device configured to support a support frame for supporting an aircraft engine along a horizontal direction to freely move along a movement direction orthogonal to a rotation center axis of the aircraft engine; and a first swinging device configured to support the support frame to freely swing about a first center axis parallel with the rotation center axis.

Further, a method for attaching an aircraft engine according to the present disclosure includes the steps of: moving a support frame for supporting the aircraft engine along a horizontal direction to a lower side of an engine attachment position; swinging the support frame about a first center axis parallel with a rotation center axis of the aircraft engine to move the aircraft engine to have a predetermined inclination angle; and moving the support frame toward an upper side in a vertical direction along the inclination angle to be positioned at the engine attachment position.

### Advantageous Effects of Invention

With the device and the method for attaching the aircraft engine according to the present disclosure, workability in work of attaching/detaching the aircraft engine can be improved.

### Brief Description of Drawings

FIG. 1 is a schematic diagram illustrating an attachment state of an engine with respect to an aircraft.
FIG. 2 is a partially cut-out side view illustrating a device for attaching an aircraft engine according to a first embodiment.
FIG. 3 is a III-III cross-sectional view of FIG. 1 illustrating the device for attaching the aircraft engine.
FIG. 4 is a IV-IV cross-sectional view of FIG. 1 illustrating the device for attaching the aircraft engine.
FIG. 5 is an explanatory diagram illustrating work of attaching the engine to the aircraft.
FIG. 6 is an explanatory diagram illustrating work of attaching the engine to the aircraft.
FIG. 7 is a partially cut-out side view illustrating a device for attaching an aircraft engine according to a second embodiment.
FIG. 8 is a VII-VII cross-sectional view of FIG. 6 illustrating the device for attaching the aircraft engine.
FIG. 9 is a schematic diagram illustrating an operation state of the device for attaching the aircraft engine.
FIG. 10 is a side view illustrating a device for attaching an aircraft engine according to a third embodiment.

### Description of Embodiments

The following describes preferred embodiments of the present disclosure in detail with reference to the drawings. The present disclosure is not limited to the embodiments, and in a case in which there are a plurality of embodiments, the embodiments may be combined with each other. Constituent elements in the embodiments include a constituent element that is easily conceivable by those skilled in the art, substantially the same constituent element, and what is called an equivalent.

### [First embodiment]

### <Aircraft>

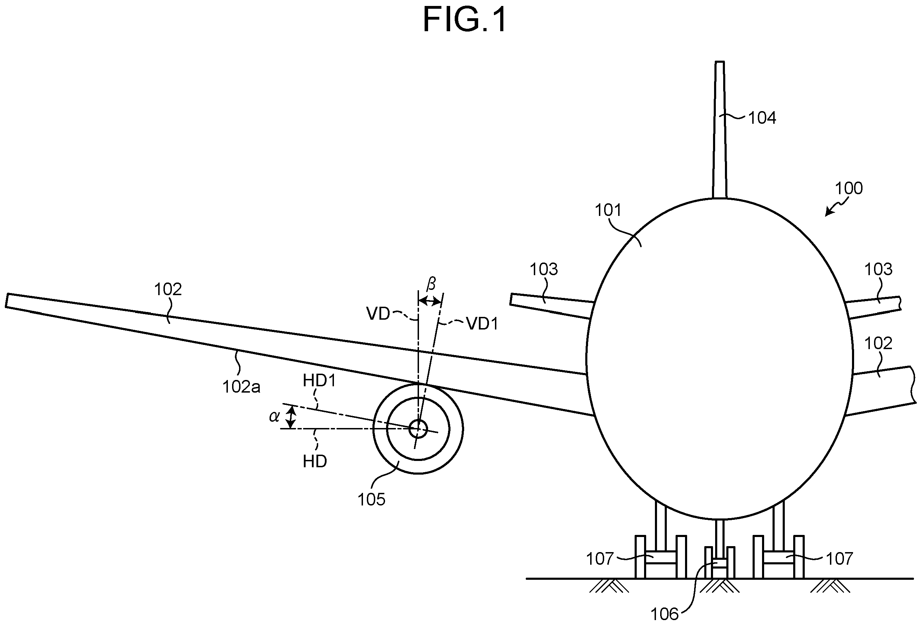

FIG. 1 is a schematic diagram illustrating an attachment state of an engine with respect to an aircraft.

As illustrated in FIG. 1, an aircraft 100 includes a pair of left and right main planes 102 disposed on a front part of a body 101, a pair of left and right horizontal tails 103 disposed on a rear part, and a vertical tail 104. In the aircraft 100, for example, an aircraft engine 105 is attached to a lower part of each of the main planes 102. However, a mounting position of the aircraft engine 105 is not limited to the lower part of the main plane 102. The aircraft engine 105 may be attached to the body 101 in some cases. A nose landing gear 106 is disposed on the front part of the aircraft 100, and a pair of left and right main landing gears 107 are disposed on the rear part.

In the aircraft 100, the main plane 102 is extended from a side part of the body 101 along a horizontal direction. Note that the main plane 102 is extended from the body 101 while being inclined toward an upper side in a vertical direction with a predetermined inclination angle with respect to the horizontal direction. The aircraft engine 105 is attached to a lower surface 102a of the main plane 102. Thus, the lower surface 102a of the main plane 102 to which the aircraft engine 105 is attached is extended in an inclination direction HD1 having an inclination angle α with respect to a horizontal direction HD.

The aircraft engine 105 is conveyed to a lower side of an attachment position on the lower surface 102a of the main plane 102. Herein, the aircraft engine 105 is raised, and positioned at the attachment position on the lower surface 102a of the main plane 102. However, the lower surface 102a of the main plane 102 is inclined, so that it is difficult to position the engine at the attachment position on the lower surface 102a of the main plane 102 with high accuracy only by raising the engine toward an upper side in a vertical direction VD. That is, the lower surface 102a of the main plane 102 is extended along the inclination direction HD1 inclined by the inclination angle α with respect to the horizontal direction HD, so that the aircraft engine 105 needs to be obliquely raised along a movement direction VD1 orthogonal to the inclination direction HD1, that is, the movement direction VD1 that is inclined by an inclination angle β, which is equal to the inclination angle α, with respect to the vertical direction VD. Due to this, it is difficult to attach the aircraft engine 105 using a device that can raise the engine only in the vertical direction such as a crane or a lifter, which is typically used.

### <Device for attaching aircraft engine>

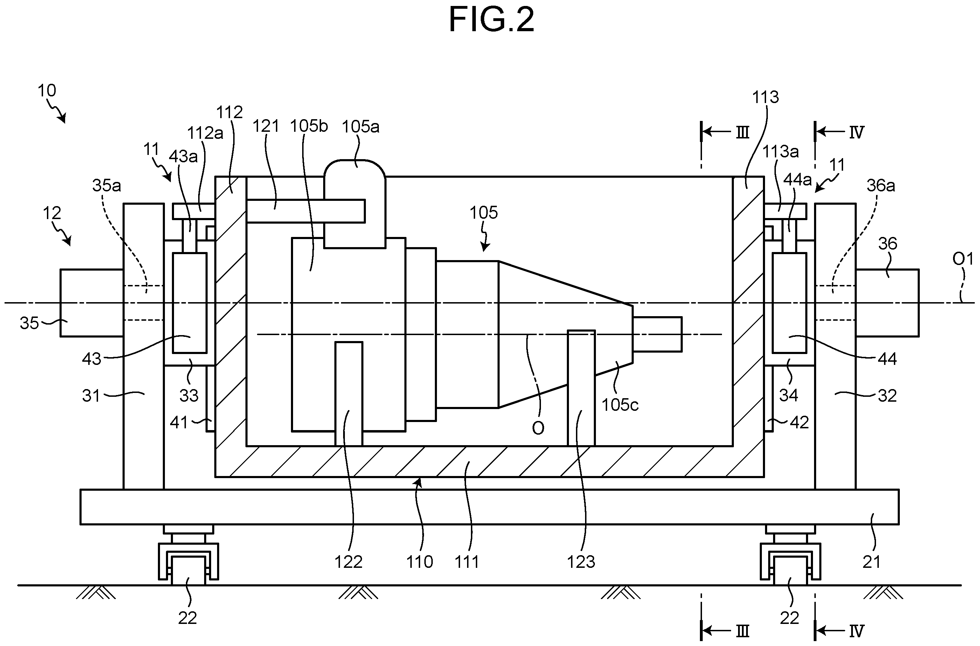

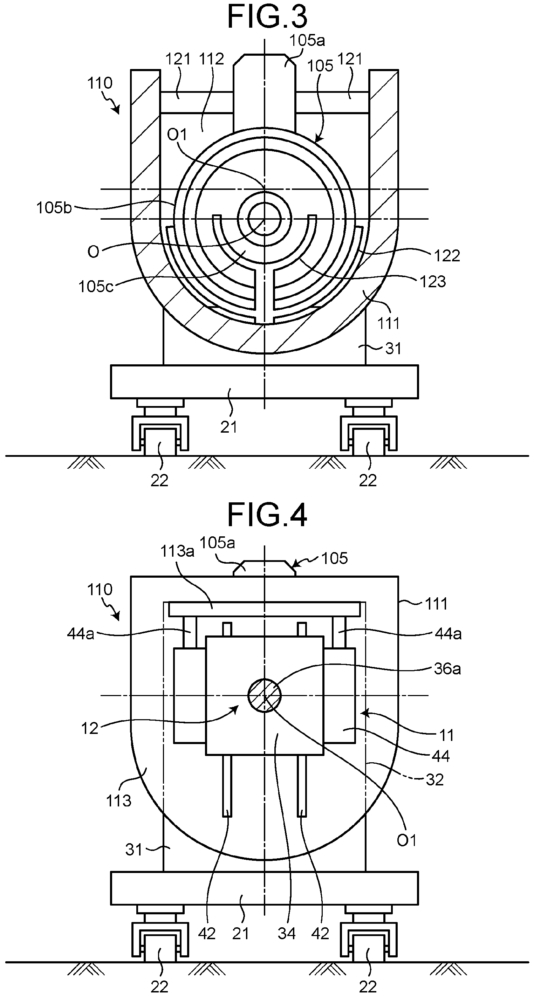

FIG. 2 is a partially cut-out side view illustrating the device for attaching the aircraft engine according to a first embodiment, FIG. 3 is a III-III cross-sectional view of FIG. 1 illustrating the device for attaching the aircraft engine, and FIG. 4 is a IV-IV cross-sectional view of FIG. 1 illustrating the device for attaching the aircraft engine.

As illustrated in FIG. 1 to FIG. 3, a device 10 for attaching the aircraft engine includes a linear movement device 11 and a first swinging device 12.

The aircraft engine 105 is supported by a support frame 110. The support frame 110 has a semi-cylindrical shape. That is, the support frame 110 includes a bottom surface part 111 having a curved shape, and a pair of end face parts 112 and 113 each having a plane shape. The end face part 112 is disposed on one side (left side in FIG. 2) of the bottom surface part 111, and the end face part 113 is disposed on the other side (right side in FIG. 2) of the surface part 111. The support frame 110 is disposed along the horizontal direction, and opens upward. Inside the support frame 110, the aircraft engine 105 is disposed along the horizontal direction. The aircraft engine 105 is supported by the support frame 110 so that a rotation center axis O runs along the horizontal direction.

The support frame 110 restrains the aircraft engine 105 with a plurality of (in the present embodiment, three) restraint members 121, 122, and 123. The aircraft engine 105 is disposed inside the support frame 110, and an attachment part 105a is restrained by the support frame 110 with the restraint member 121. In the aircraft engine 105, one end part 105b is restrained by the support frame 110 with the restraint member 122, and another end part 105c is restrained by the support frame 110 with the restraint member 123.

The linear movement device 11 and the first swinging device 12 are mounted on a traveling carrier 21. The traveling carrier 21 has a plate shape along the horizontal direction. A plurality of (in the present embodiment, four) traveling wheels 22 are mounted on a lower surface part of the traveling carrier 21. However, the number of the traveling wheels 22 is not limited to four. Each of the traveling wheels 22 can rotate about a center axis in the vertical direction with respect to the traveling carrier 21, and can be steered toward a movement direction of the traveling carrier 21. Although not illustrated, the traveling carrier 21 includes a steering device that can steer each of the traveling wheels 22, and a drive device that can drive and rotate the traveling wheel. A driving operation of the traveling carrier 21 can be performed when an operator rides thereon and operates a steering wheel, an accelerator pedal, and a brake pedal. However, the driving operation of the traveling carrier 21 can be performed by remote control without the operator riding thereon. Alternatively, the traveling carrier 21 may be configured to travel by being pulled by a vehicle.

The linear movement device 11 is disposed on the traveling carrier 21, and supports the support frame 110 to freely move along a movement direction orthogonal to the rotation center axis O. The first swinging device 12 supports the support frame 110 to freely swing about a first center axis O1 parallel with the rotation center axis O. Specifically, the first swinging device 12 is disposed on the traveling carrier 21, the first swinging device 12 supports the linear movement device 11, and the linear movement device 11 supports the support frame 110.

That is, a pair of support members 31 and 32 are disposed on one side and the other side of the traveling carrier 21 in a direction of the first center axis O1. The support members 31 and 32 have the same plate shape. The support member 31 is fixed along a direction orthogonal to an axis direction of the first center axis O1 on one side in the axis direction of the first center axis O1 on the upper surface of the traveling carrier 21. The support member 32 is fixed along a direction orthogonal to the axis direction of the first center axis O1 on the other side in the axis direction of the first center axis O1 on the upper surface of the traveling carrier 21. The support member 31 and the support member 32 are opposed to each other in parallel with a gap longer than a length of the support frame 110 in the axis direction of the first center axis O1.

The first swinging device 12 includes a pair of first swinging members 33 and 34, and a pair of first drive devices 35 and 36. The first swinging member 33 is disposed on the support member 32 side of the support member 31. The first drive device 35 is disposed on a side opposite to the support member 32 of the support member 31. The first drive device 35 is fixed to the support member 31, and an output shaft 35a positioned at the first center axis O1 passes through the support member 31 to be coupled to the first swinging member 33. Thus, the first swinging member 33 is supported by the support member 31 to freely swing (freely rotate) about the first center axis O1, and can be swung (rotated) by the first drive device 35.

The first swinging member 34 is disposed on the support member 31 side of the support member 32. The first drive device 36 is disposed on a side opposite to the support member 31 of the support member 32. The first drive device 36 is fixed to the support member 32, and an output shaft 36a positioned at the first center axis O1 passes through the support member 32 to be coupled to the first swinging member 34. Thus, the first swinging member 34 is supported by the support member 32 to freely swing (freely rotate) about the first center axis O1, and can be swung (rotated) by the first drive device 36.

The pair of first swinging members 33 and 34 are configured as separate members, but may be configured as an integrated member having a rectangular frame shape by coupling the first swinging members 33 and 34 with a coupling member. The pair of first swinging members 33 and 34 are disposed as the first swinging device 12, but only one of them may be disposed.

The linear movement device 11 includes guide rails 41 and 42, and drive devices 43 and 44. The guide rail 41 includes a pair of parallel rail parts, and is fixed to an outer surface of the end face part 112 of the support frame 110. On the other hand, a guide recessed part (not illustrated) is disposed on a side surface on the support frame 110 side of the first swinging member 33. The guide rail 41 of the support frame 110 is fitted into the guide recessed part of the first swinging member 33 to be able to linearly move. The drive device 43 is, for example, a pair of air cylinders (or hydraulic cylinders and the like), and fixed to both sides of the first swinging member 33. A front end portion of a drive rod 43a of the drive device 43 is coupled to a coupling part 112a fixed to the end face part 112 of the support frame 110.

The guide rail 42 includes a pair of parallel rail parts, and is fixed to an outer surface of the end face part 113 of the support frame 110. On the other hand, a guide recessed part (not illustrated) is disposed on a side surface on the support frame 110 side of the first swinging member 34. The guide rail 42 of the support frame 110 is fitted into the guide recessed part of the first swinging member 34 to be able to linearly move. The drive device 44 is, for example, a pair of air cylinders (or hydraulic cylinders and the like), and fixed to both sides of the first swinging member 34. A front end portion of a drive rod 44a of the drive device 44 is coupled to a coupling part 113a fixed to the end face part 113 of the support frame 110.

The guide rails 41 and 42 are disposed on the support frame 110, and the guide recessed parts are disposed on the first swinging members 33 and 34. Alternatively, the guide recessed parts may be disposed on the support frame 110, and the guide rails 41 and 42 may be disposed on the first swinging members 33 and 34.

In the first swinging device 12, when the first drive devices 35 and 36 are driven in synchronization with each other, the output shafts 35a and 36a rotate, and the first swinging members 33 and 34 rotate about the first center axis O1. Accordingly, the support frame 110, which is coupled to the first swinging members 33 and 34 via the guide rails 41 and 42, rotates about the first center axis O1. Thus, the aircraft engine 105 supported by the support frame 110 can be swung, and a circumferential position (attachment angle) of the attachment part 105a on the aircraft engine 105 can be adjusted.

In the linear movement device 11, when the drive devices 43 and 44 are driven in synchronization with each other, the drive rods 43a and 44a extend, for example, and the support frame 110 moves along the guide rails 41 and 42 via the coupling parts 112a and 113a. At this point, if the support frame 110 is rotated by the first swinging device 12, and the guide rails 41 and 42 are inclined with respect to the vertical direction, the support frame 110 rises along a direction inclined with respect to the vertical direction. Thus, the aircraft engine 105 supported by the support frame 110 can be raised along the direction inclined with respect to the vertical direction.

### <Method for attaching aircraft engine>

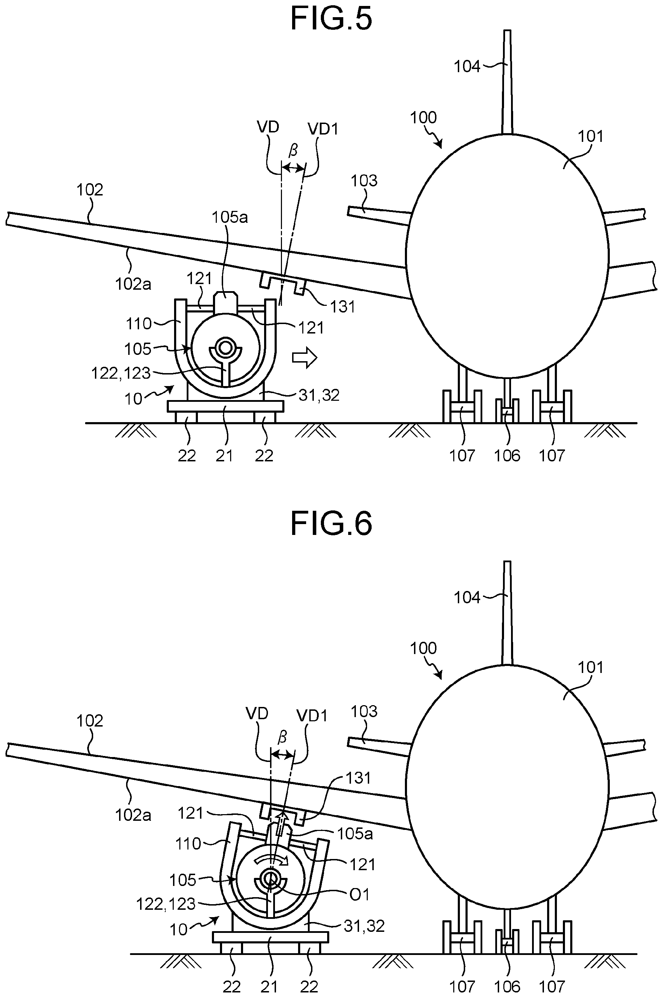

FIG. 5 and FIG. 6 are explanatory diagrams illustrating work of attaching the engine to the aircraft.

A method for attaching the engine according to the first embodiment includes a step of moving the support frame 110 supporting the aircraft engine 105 along the horizontal direction to a lower side of an engine attachment position, a step of swinging the support frame 110 about the first center axis O1 parallel with the rotation center axis O of the aircraft engine 105 to move the aircraft engine 105 to have a predetermined inclination angle, and a step of moving the support frame 110 toward an upper side in the vertical direction along the inclination angle to be positioned at the engine attachment position.

As illustrated in FIG. 1, in the aircraft 100, the aircraft engine 105 is attached to the lower surface 102a of the main plane 102. Regular maintenance is required for the aircraft engine 105. When maintenance is performed on the aircraft engine 105, the aircraft 100 is conveyed to a maintenance site. The aircraft engine 105 is then detached from the main plane 102, and attached to the main plane 102 again after the maintenance is performed.

As illustrated in FIG. 5, an attachment member 131 is fixed to the lower surface 102a of the main plane 102. The lower surface 102a of the main plane 102 is inclined, so that the attachment member 131 fixed to the lower surface 102a is also inclined. Accordingly, the aircraft engine 105 to be attached to the attachment member 131 needs to be obliquely raised along the movement direction VD1 that is inclined by the inclination angle β with respect to the vertical direction VD. Thus, at the time of attaching the aircraft engine 105 to the main plane 102 with the attachment member 131, the aircraft engine 105 needs to be inclined corresponding to the inclination angle of the attachment member 131 and raised toward the upper side in the vertical direction to be positioned at the attachment position.

As illustrated in FIG. 2, the aircraft engine 105 is supported by the support frame 110, and the support frame 110 is supported by the device 10 for attaching the aircraft engine. First, as illustrated in FIG. 5, the traveling carrier 21 is moved, and the aircraft engine 105 supported by the support frame 110 is moved to the lower side of the attachment position, that is, the lower side of the attachment member 131 fixed to the main plane 102, and stopped.

As illustrated in FIG. 6, by operating the first swinging device 12 (refer to FIG. 2), the support frame 110 is swung by the inclination angle β about the first center axis O1. In the aircraft engine 105 supported by the support frame 110, a rising direction of the attachment part 105a matches a fitting direction with respect to the attachment member 131 at a position where the attachment part 105a is opposed to the attachment member 131. In this state, by operating the linear movement device 11 (refer to FIG. 2), the support frame 110 is raised toward the upper side in the movement direction VD1 that is inclined by the inclination angle β with respect to the vertical direction VD while maintaining the inclination angle β of the support frame 110. Accordingly, in the aircraft engine 105 supported by the support frame 110, the attachment part 105a is properly fitted into the attachment member 131 of the main plane 102, and positioned at a proper position.

Subsequently, the attachment part 105a of the aircraft engine 105 is fastened to the attachment member 131, and support for the aircraft engine 105 by the support frame 110 is released. For the aircraft engine 105, a nacelle or the like enclosing the aircraft engine 105 is disposed on the lower part of the main plane 102, but is not illustrated herein.

Herein, described is work of attaching the aircraft engine 105 to the main plane 102 by the device 10 for attaching the aircraft engine according to the present embodiment, but the device 10 for attaching the aircraft engine can be applied to work of detaching the aircraft engine 105 from the main plane 102.

### [Second embodiment]

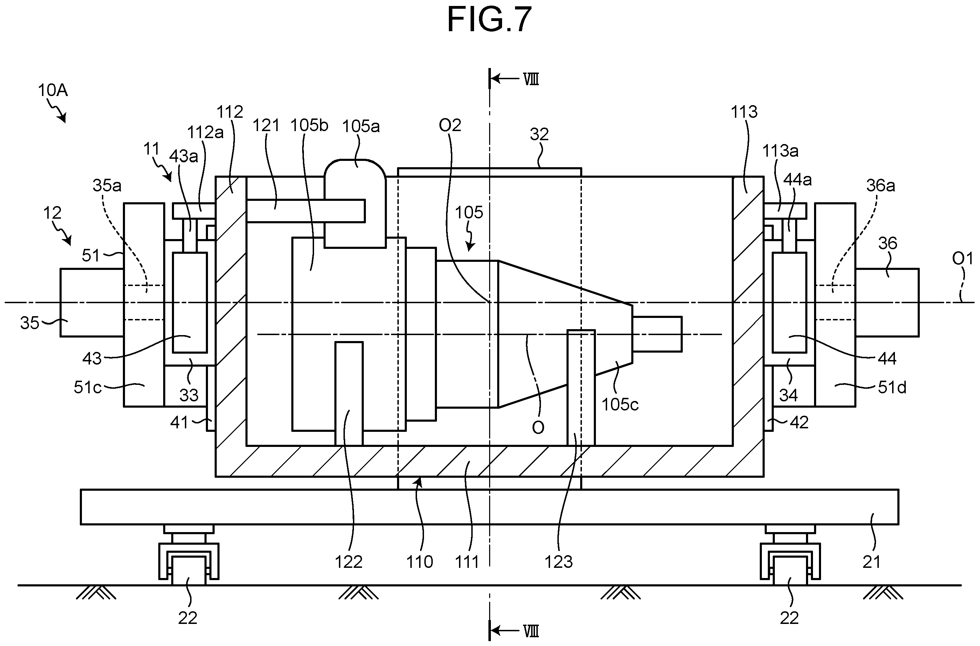

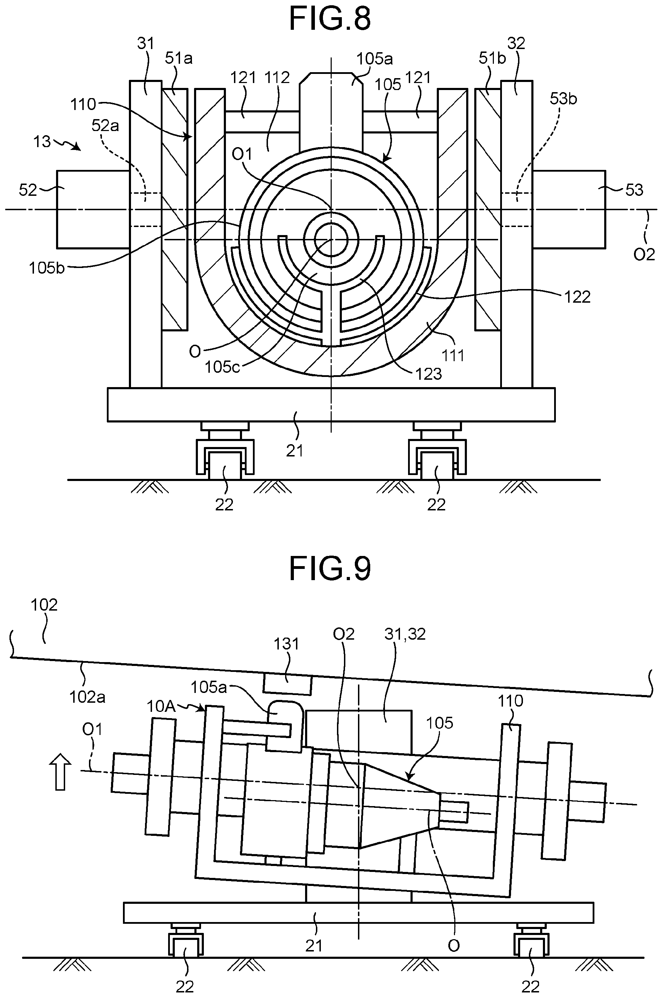

FIG. 7 is a partially cut-out side view illustrating the device for attaching the aircraft engine according to a second embodiment, FIG. 8 is a VII-VII cross-sectional view of FIG. 6 illustrating the device for attaching the aircraft engine, and FIG. 9 is a schematic diagram illustrating an operation state of the device for attaching the aircraft engine. A member having the same function as that in the first embodiment described above is denoted by the same reference numeral, and detailed description thereof will not be repeated.

As illustrated in FIG. 7 and FIG. 8, a device 10A for attaching the aircraft engine includes the linear movement device 11, the first swinging device 12, and a second swinging device 13. The linear movement device 11 and the first swinging device 12 are substantially the same as those in the first embodiment.

The second swinging device 13 is disposed on the traveling carrier 21, and supports the support frame 110 to freely swing about a second center axis O2 that is orthogonal to the first center axis O1 and runs along the horizontal direction. Specifically, the second swinging device 13 is disposed on the traveling carrier 21, the second swinging device 13 supports the first swinging device 12, the first swinging device 12 supports the linear movement device 11, and the linear movement device 11 supports the support frame 110. Positions of the first center axis O1 and the second center axis O2 in the vertical direction may be the same, or may be shifted from each other.

That is, the pair of support members 31 and 32 are disposed on one side and the other side of the traveling carrier 21 in a direction of the second center axis O2. The support members 31 and 32 have the same plate shape. The support member 31 is fixed along a direction orthogonal to an axis direction of the second center axis O2 on an upper surface of the traveling carrier 21 on one side in the axis direction of the second center axis O2. The support member 32 is fixed along a direction orthogonal to the axis direction of the second center axis O2 on an upper surface of the traveling carrier 21 on the other side in the axis direction of the second center axis O2. The support member 31 and the support member 32 are opposed to each other in parallel with a gap longer than a length of the support frame 110 in the axis direction of the second center axis O2.

The second swinging device 13 includes a second swinging member 51, and a pair of second drive devices 52 and 53. The second swinging member 51 has a rectangular frame shape, and is disposed along the vertical direction between the support member 31 and the support member 32. The second swinging member 51 includes first members 51a and 51b disposed to be opposed to the support member 31 and the support member 32, and second members 51c and 51d coupling the first members 51a and 51b. The second drive device 52 is disposed on a side opposite to the support member 32 of the support member 31. The second drive device 53 is disposed on a side opposite to the support member 31 of the support member 32. The second drive device 52 is fixed to the support member 31, and an output shaft 52a positioned at the second center axis O2 passes through the support member 31 to be coupled to the first member 51a of the second swinging member 51. The second drive device 53 is fixed to the support member 32, and an output shaft 53a positioned at the second center axis O2 passes through the support member 32 to be coupled to the first member 51b of the second swinging member 51.

Thus, the second swinging member 51 is supported by the support members 31 and 32 to freely swing (freely rotate) about the second center axis O2, and can be swung (rotated) by the second drive devices 52 and 53. The pair of second drive devices 52 and 53 are disposed as the second swinging device 13, but only one of them may be disposed.

The first swinging device 12 includes the pair of first swinging members 33 and 34, and the pair of first drive devices 35 and 36. The first swinging member 33 is disposed on the first member 51b side of the first member 51a of the second swinging member 51. The first drive device 35 is disposed on a side opposite to the first member 51b of the first member 51a. The first drive device 35 is fixed to the first member 51a, and the output shaft 35a positioned at the first center axis O1 passes through the first member 51a to be coupled to the first swinging member 33. Thus, the first swinging member 33 is supported by the first member 51a to freely swing (freely rotate) about the first center axis O1, and can be swung (rotated) by the first drive device 35.

The first swinging member 34 is disposed on the first member 51a side of the first member 51b of the second swinging member 51. The first drive device 36 is disposed on a side opposite to the first member 51a of the first member 51b. The first drive device 36 is fixed to the first member 51b, and the output shaft 36a positioned at the first center axis O1 passes through the first member 51b to be coupled to the first swinging member 34. Thus, the first swinging member 34 is supported by the first member 51b to freely swing (freely rotate) about the first center axis O1, and can be swung (rotated) by the first drive device 36.

The linear movement device 11 includes the guide rails 41 and 42, and the drive devices 43 and 44.

In the second swinging device 13, when the second drive devices 52 and 53 are driven in synchronization with each other, the output shafts 52a and 53a rotate, and the second swinging member 51 rotates about the second center axis O2. Accordingly, the support frame 110, which is supported by the second swinging member 51 via the first swinging device 12 and the linear movement device 11, rotates about the second center axis O2. Thus, the aircraft engine 105 supported by the support frame 110 can be swung, and an angle of the attachment part 105a of the aircraft engine 105 with respect to the axis direction (direction of a rotation center axis) can be adjusted.

As illustrated in FIG. 9, in the aircraft 100, the lower surface 102a of the main plane 102 may be inclined, in a front and rear direction, toward the upper side in the vertical direction with a predetermined inclination angle with respect to the horizontal direction. Thus, at the time of attaching the aircraft engine 105 to the main plane 102, the aircraft engine 105 needs to be inclined with respect to the horizontal direction (vertical direction) in the front and rear of a direction of the rotation center axis O (first center axis O1).

That is, the aircraft engine 105 is supported by the support frame 110, and the support frame 110 is supported by the device 10A for attaching the aircraft engine. First, the traveling carrier 21 is moved, and the aircraft engine 105 supported by the support frame 110 is moved to the lower side of the attachment position, that is, the lower side of the attachment member 131 fixed to the main plane 102, and stopped.

By operating the second swinging device 13 (refer to FIG. 8), the support frame 110 is swung by a predetermined inclination angle about the second center axis O2. In the aircraft engine 105 supported by the support frame 110, a rising direction of the attachment part 105a matches a fitting direction with respect to the attachment member 131 at a position where the attachment part 105a is opposed to the attachment member 131. In this state, by operating the linear movement device 11 (refer to FIG. 7), the support frame 110 is raised while maintaining the inclination angle of the support frame 110. Accordingly, in the aircraft engine 105 supported by the support frame 110, the attachment part 105a is properly fitted into the attachment member 131 of the main plane 102, and positioned at a proper position.

Subsequently, the attachment part 105a of the aircraft engine 105 is fastened to the attachment member 131, and support for the aircraft engine 105 by the support frame 110 is released. Herein, described is work of attaching the aircraft engine 105 to the main plane 102 by the device 10A for attaching the aircraft engine according to the present embodiment, but the device 10A for attaching the aircraft engine can be applied to work of detaching the aircraft engine 105 from the main plane 102.

### [Third embodiment]

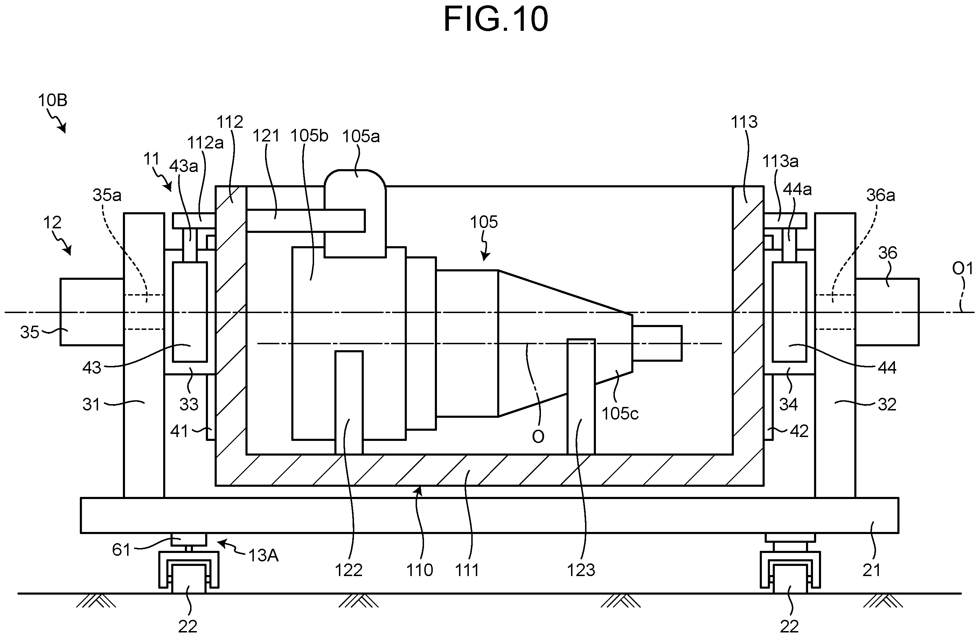

FIG. 10 is a side view illustrating the device for attaching the aircraft engine according to a third embodiment. A member having the same function as that in the first embodiment described above is denoted by the same reference numeral, and detailed description thereof will not be repeated.

As illustrated in FIG. 10, a device 10B for attaching the aircraft engine includes the linear movement device 11, the first swinging device 12, and a second swinging device 13A. The linear movement device 11 and the first swinging device 12 are substantially the same as those in the first embodiment.

The second swinging device 13A is disposed on the traveling carrier 21, and supports the support frame 110 to freely swing about the second center axis O2 that is orthogonal to the first center axis O1 and runs along the horizontal direction. Specifically, the four traveling wheels 22 are mounted on the lower surface part of the traveling carrier 21. The two traveling wheels 22 on one side (left side in FIG. 10) of the first center axis O1 are mounted on the lower surface of the traveling carrier 21 via a hydraulic cylinder 61 constituting the second swinging device 13A. The second swinging device 13A supports the support frame 110 to freely swing by performing extension driving (or contraction driving) for the hydraulic cylinder 61 to incline the traveling carrier 21. In this case, the second center axis O2 becomes a grounding position of the traveling wheel 22 on the other side (right side in FIG. 10) of the first center axis O1. The two traveling wheels 22 on the other side (right side in FIG. 10) of the first center axis O1 may also be mounted on the lower surface of the traveling carrier 21 via a hydraulic cylinder constituting the second swinging device 13A.

Behavior of the device 10B for attaching the aircraft engine is the same as that of the device 10A for attaching the aircraft engine in the second embodiment, so that description thereof will not be repeated.

### [Working effect of present embodiment]

The device for attaching the aircraft engine according to a first aspect includes the linear movement device 11 that supports the support frame 110 supporting the aircraft engine 105 along the horizontal direction to freely move in the movement direction orthogonal to the rotation center axis O of the aircraft engine 105, and the first swinging device 12 that supports the support frame 110 to freely swing about the first center axis O1 parallel with the rotation center axis O.

With the device for attaching the aircraft engine according to the first aspect, the attachment angle of the aircraft engine 105 can be adjusted by the first swinging device 12 by swinging the support frame 110 supporting the aircraft engine 105 even if the attachment angle of the aircraft engine 105 with respect to the aircraft 100 is inclined in a right and left direction with respect to the vertical direction, and workability in work of attaching/detaching the aircraft engine can be improved.

The device for attaching the aircraft engine according to a second aspect is the device for attaching the aircraft engine according to the first aspect further including the traveling carrier 21. Additionally, the first swinging device 12 is disposed on the traveling carrier 21, the first swinging device 12 supports the linear movement device 11, and the linear movement device 11 supports the support frame 110. Due to this, by causing the traveling carrier 21 to travel, the linear movement device 11, the first swinging device 12, and the support frame 110 can be moved to desired positions.

The device for attaching the aircraft engine according to a third aspect is the device for attaching the aircraft engine according to the second aspect, and additionally, the pair of support members 31 and 32 are disposed on one side and the other side in the direction of the first center axis O1 of the traveling carrier 21, the pair of first swinging members 33 and 34 constituting the first swinging device 12 are supported by the pair of support members 31 and 32 to freely swing, and the linear movement device 11 supports the support frame 110 to freely move with respect to the pair of first swinging members 33 and 34. Due to this, the linear movement device 11 and the first swinging device 12 can be efficiently mounted on the traveling carrier 21.

The device for attaching the aircraft engine according to a fourth aspect is the device for attaching the aircraft engine according to the second aspect or the third aspect, and additionally, the traveling carrier 21 includes at least three traveling wheels 22 that can be steered. Due to this, the position of the aircraft engine 105 with respect to the engine attachment position can be easily adjusted.

The device for attaching the aircraft engine according to a fifth aspect is the device for attaching the aircraft engine according to any one of the first aspect to the fourth aspect, and further includes the second swinging devices 13 and 13A that support the support frame 110 to freely swing about the second center axis O2 that is orthogonal to the first center axis O1 and runs along the horizontal direction. Due to this, the attachment angle of the aircraft engine 105 can be adjusted by the first swinging device 12 and the second swinging devices 13 and 13A by swinging the support frame 110 supporting the aircraft engine 105 even if the attachment angle of the aircraft engine 105 with respect to the aircraft 100 is inclined in the front and rear direction and the right and left direction with respect to the vertical direction.

The device for attaching the aircraft engine according to a sixth aspect is the device for attaching the aircraft engine according to the fifth aspect further including the traveling carrier 21. Additionally, the second swinging device 13 is disposed on the traveling carrier 21, the second swinging device 13 supports the first swinging device 12, the first swinging device 12 supports the linear movement device 11, and the linear movement device 11 supports the support frame 110. Due to this, by causing the traveling carrier 21 to travel, the linear movement device 11, the first swinging device 12, the second swinging device 13, and the support frame 110 can be moved to desired positions.

The device for attaching the aircraft engine according to a seventh aspect is the device for attaching the aircraft engine according to the fifth aspect or the sixth aspect, and additionally, the pair of support members 31 and 32 are disposed on one side and the other side in the direction of the second center axis O2 of the traveling carrier 21, the second swinging member 51 constituting the second swinging device 13 is supported by the pair of support members 31 and 32 to freely swing, the pair of first swinging members 33 and 34 constituting the first swinging device 12 are supported by the second swinging member 51 to freely swing, and the linear movement device 11 supports the support frame 110 to freely move with respect to the pair of first swinging members 33 and 34. Due to this, the linear movement device 11, the first swinging device 12, and the second swinging device 13 can be efficiently mounted on the traveling carrier 21.

The device for attaching the aircraft engine according to an eighth aspect is the device for attaching the aircraft engine according to the seventh aspect, and additionally, the second swinging device 13A supports the support frame 110 to freely swing by inclining the traveling carrier 21. Due to this, the structure can be simplified without modifying the linear movement device 11 or the first swinging device 12.

The method for attaching the aircraft engine according to a ninth aspect includes a step of moving the support frame 110 supporting the aircraft engine 105 along the horizontal direction to a lower side of an engine attachment position, a step of swinging the support frame 110 about the first center axis O1 parallel with the rotation center axis O of the aircraft engine 105 to move the aircraft engine 105 to have a predetermined inclination angle, and a step of moving the support frame 110 toward an upper side in the vertical direction along the inclination angle to be positioned at the engine attachment position. Due to this, the attachment angle of the aircraft engine 105 can be adjusted even if the attachment angle of the aircraft engine 105 with respect to the aircraft 100 is inclined with respect to the vertical direction, and workability in work of attaching/detaching the aircraft engine can be improved.

In the embodiment described above, the support frame 110 is assumed to have a semi-cylindrical shape, but the shape is not limited thereto. The shape may be any shape so long as it supports the aircraft engine 105.

In the embodiment described above, the second swinging device is assumed to be the hydraulic cylinder 61, but the first swinging device may be a fluid pressure cylinder such as the hydraulic cylinder 61. Each of the first swinging device and the second swinging device is not limited to the fluid pressure cylinder, but may be a screw device and the like.

### Reference Signs List

10, 10A, 10B DEVICE FOR ATTACHING AIRCRAFT ENGINE
11 LINEAR MOVEMENT DEVICE
12 FIRST SWINGING DEVICE
13, 13A SECOND SWINGING DEVICE
21 TRAVELING CARRIER
22 TRAVELING WHEEL
31, 32 SUPPORT MEMBER
33, 34 FIRST SWINGING MEMBER
35, 36 FIRST DRIVE DEVICE
41, 42 GUIDE RAIL
43, 44 DRIVE DEVICE
51 SECOND SWINGING MEMBER
52, 53 SECOND DRIVE DEVICE
61 HYDRAULIC CYLINDER
100 AIRCRAFT
101 BODY
102 MAIN PLANE
103 HORIZONTAL TAIL
104 VERTICAL TAIL
105 AIRCRAFT ENGINE
110 SUPPORT FRAME

## Claims

1. A device for attaching an aircraft engine, the device comprising:
a linear movement device configured to support a support frame for supporting an aircraft engine along a horizontal direction to freely move along a movement direction orthogonal to a rotation center axis of the aircraft engine; and
a first swinging device configured to support the support frame to freely swing about a first center axis parallel with the rotation center axis.

2. The device for attaching the aircraft engine according to claim 1, the device further comprising:
a traveling carrier, wherein
the first swinging device is disposed on the traveling carrier, the first swinging device supports the linear movement device, and the linear movement device supports the support frame.

3. The device for attaching the aircraft engine according to claim 2, wherein a pair of support members are disposed on one side and another side in a direction of the first center axis of the traveling carrier, a pair of first swinging members constituting the first swinging device are supported by the pair of support members to freely swing, and the linear movement device supports the support frame to freely move with respect to the pair of first swinging members.

4. The device for attaching the aircraft engine according to claim 2 or 3, wherein the traveling carrier includes at least three wheels that is able to be steered.

5. The device for attaching the aircraft engine according to claim 1, the device further comprising:
a second swinging device configured to support the support frame to freely swing about a second center axis that is orthogonal to the first center axis and runs along the horizontal direction.

6. The device for attaching the aircraft engine according to claim 5, the device further comprising:
a traveling carrier, wherein
the second swinging device is disposed on the traveling carrier, the second swinging device supports the first swinging device, the first swinging device supports the linear movement device, and the linear movement device supports the support frame.

7. The device for attaching the aircraft engine according to claim 6, wherein a pair of support members are disposed on one side and another side in a direction of the second center axis of the traveling carrier, a second swinging member constituting the second swinging device is supported by the pair of support members to freely swing, a pair of first swinging members constituting the first swinging device are supported by the second swinging member to freely swing, and the linear movement device supports the support frame to freely move with respect to the pair of first swinging members.

8. The device for attaching the aircraft engine according to claim 6 or 7, wherein the second swinging device supports the support frame to freely swing by inclining the traveling carrier.

9. A method for attaching an aircraft engine, the method comprising the steps of:
moving a support frame for supporting the aircraft engine along a horizontal direction to a lower side of an engine attachment position;
swinging the support frame about a first center axis parallel with a rotation center axis of the aircraft engine to move the aircraft engine to have a predetermined inclination angle; and
moving the support frame toward an upper side in a vertical direction along the inclination angle to be positioned at the engine attachment position.
